# EUROPEAN PATENT APPLICATION

(11) **EP 2 685 052 A1**
(43) Date of publication of application: **15.01.2014**
(21) Application number: 12175749.6
(22) Date of filing: 10.07.2012
(51) Int. Cl.: F01D 11/00, F02C 7/24, F02C 7/28, F16J 15/08

(54) **A heat shield and a method for construction thereof**

(71) Applicant: Siemens Aktiengesellschaft, 80333 München (DE)
(72) Inventor: Szijarto, Janos, 61295 Finspong (SE)

(57) **Abstract**

A circumferential heat shield (150) for a turbomachine (10) and a method for construction thereof are presented. The circumferential heat shield (150) comprises first and second heat shield segments (160,170), and a sealing member (180) for sealing the heat shield segments (160,170). The heat shield segments (160,170) comprise respective longitudinally extending circumferential front faces (220,230). The sealing member (180) comprises a circumferentially resilient portion (190), which is located between the first and second circumferential sealing segments (250,260) and pre-stressed between the circumferential front faces (220,230).

## Description

The present invention relates to a heat shield and a method for construction of the heat shield, and in particular to, a circumferential heat shield for a turbomachine and a method for construction of the circumferential heat shield.

A heat shield insulates and protects a system, for example a gas turbine, from intense heat and high temperatures to which the system is exposed to. The heat shield shields the system by absorbing excessive heat from an outside surface by either absorbing, reflecting or dissipating the heat. The heat shield is typically made of a metal, an alloy, a composite material, or a combination of the aforesaid, which is capable of withstanding the aforementioned high temperatures and thermal stresses arising thereof.

In the field of turbomachines, such as a gas turbine, a heat shield is present for shielding the turbine section of the gas turbine. The heat shield forms a part of a stator of the turbine section, and isolates the turbine section from other sections of the gas turbine. The heat shield protects the other sections from the hot gases, intense heat and high temperatures produced during the combustion of fuel in a combustor area of the turbine section. The shielding results in protecting the turbine from thermal breakdowns and operational shutdowns. However, the heat shield undergoes thermal expansion upon being exposed to these high temperatures, and thermal cracks arising thereof cause uncontrolled thermal leakages.

WO 2007101757 A1 titled 'Gas turbine with annular heat shield and angled sealing strips' relates to a gas turbine having a stator, which concentrically encloses a hot gas passage and is screened off from the hot gas passage by an annular heat shield, which is composed of a multiplicity of segments, which are arranged one behind the other in the circumferential direction. The segments are contiguous in the circumferential direction in each case while forming a gap, wherein, in order to seal the gaps between the contiguous segments, seals are arranged which comprise thin, elongated sealing strips which are accommodated in sealing grooves, corresponding to one another and defined by a wall transversely to the longitudinal direction, in the opposite end faces of the contiguous segments of the heat shield. This heat shield is not stable, and is incapable of preventing the uncontrolled thermal leakages due to the inefficient design of the sealing.

It is an object of the present invention to propose a stable, flexible and an efficient design solution for a heat shield.

The aforementioned object is achieved by a circumferential heat shield for a turbomachine according to claim 1 and a method for construction of the heat shield according to claim 14.

The underlying idea of the present invention is to design a circumferential heat shield that is both stable and flexible. A circumferential heat shield for a turbomachine is described herein. The heat shield comprises a first heat shield segment and a second heat shield segment. Each heat shield segment comprises a respective circumferential front face opposing one another. A sealing member is present between the circumferential front faces, and the sealing member closes a gap between the heat shield segments. A portion of the sealing member is circumferentially resilient. Furthermore, the circumferentially resilient portion is pre-stressed by the circumferential front faces. Therefore, with an increase in operational temperature, the heat shield segments and the sealing member expand uniformly without causing much stress on the heat shield. Herewith, the design of the heat shield is improved such that thermal expansions of the heat shield do not result in mechanical cracks and breakdowns.

According to an embodiment of the present invention, the sealing member comprises a first sealing segment coupled to the first circumferential front face and a second sealing segment coupled to the second circumferential front face. The circumferentially resilient portion is located between the first sealing segment and the second sealing segment. Herewith, the heat shield segments are compactly held together to form the heat shield.

According to another embodiment of the present invention, the circumferential front faces comprise respective means for receiving the respective sealing segments. In preferred variations of this embodiment, the respective means are respective grooves. The grooves receive the respective sealing segments, whereby the respective sealing segments are coupled with the respective circumferential front faces. The Grooves simplify as well as enhance the mechanical convenience of coupling.

According to yet another embodiment of the present invention, the sealing segments are tightly coupled to respective circumferential front faces. Tight coupling renders mechanical stability to the heat shield and permits the heat shield to be operated even at extreme operational conditions.

According to yet another embodiment of present invention, the sealing member comprises an integral axial sealing segment located at an extreme end of the sealing member. The integral axial sealing segment protrudes radially outwards from the circumferentially resilient portion.

According to yet another embodiment of present invention, the heat shield comprises an axial seal arranged at an extreme end of the sealing member. The axial seal protrudes radially outwards from the circumferentially resilient portion.

Herewith, by means of using either an integral axial sealing segment or an axial seal, a hot gas path from an outside pressure of a compressor of the turbomachine is sealed. According to yet another embodiment of present invention, a coefficient of thermal expansion of the circumferentially resilient portion is higher than individual coefficients of thermal expansion of the heat shield segments. Therefore, for any given temperature, the circumferentially resilient portion undergoes higher volumetric expansion than either of the heat shield segments. Herewith, the mechanical flexibility if further enhanced and this reduces damage of the heat shield when the same is exposed to very high operational temperatures.

According to yet another embodiment of present invention, the circumferentially resilient portion is corrugated. Corrugated profiles increase circumferential resilience, which is beneficial in enhancing the compactness of heat shields comprising multiple heat shield segments.

According to yet another embodiment of present invention, circumferentially resilient portion is laser sintered. Herewith, it is possible to obtain customized shapes and profiles of the circumferentially resilient portion in a simplified manner.

According to yet another embodiment of present invention, the sealing member comprises an alloy of nickel. Nickel alloys display a uniform and a predictable expansion over a particular temperature range. Furthermore, nickel alloys possess high strength, a constant modulus of elasticity and a high co-efficient of thermal expansion. Thereby, the stability of the heat shield is further enhanced.

According to yet another embodiment of the present invention, the sealing member comprises one or more holes for introducing a controlled leakage into a geometrical space enclosed by the circumferential heat shield. Herewith, the ambient temperature of the geometrical space is regulated and thereby the life of the heat shield is enhanced.

In a method for construction of the circumferential heat shield, the heat shield segments are arranged such that the circumferential front faces are opposite to one another. The sealing member is arranged between the circumferential front faces such that the gap between the heat shield segments is closed. The sealing member is arranged such that the circumferentially resilient portion is circumferentially pre-stressed by the circumferential front faces.

According to an embodiment of the present invention, one or more holes are provided on the sealing member. The controlled leakage is introduced into the geometrical space enclosed by the circumferential heat shield. Herewith, the ambient temperature of the geometrical space is regulated.

The aforementioned and other embodiments of the invention related to the circumferential heat shield and the method of construction thereof will now be addressed with reference to the accompanying drawings of the present invention. The illustrated embodiments are intended to illustrate, but not to limit the invention. The accompanying drawings contain the following figures, in which like numbers refer to like parts, throughout the description and drawings.

The figures illustrate in a schematic manner further examples of the embodiments of the invention, in which:
- FIG 1: depicts a block diagram of a turbomachine and its components, which includes a turbine with a circumferential heat shield,
- FIG 2: depicts an elevated view of the turbine with the circumferential heat shield referred to in FIG 1, wherein the circumferential heat shield comprises a first heat shield segment, a second heat shield segment and a sealing member, wherein the sealing member seals the first heat shield segment and the second heat shield segment,
- FIG 3: depicts a perspective view of an embodiment of the circumferential heat shield referred to in FIG 2, wherein the circumferential heat shield comprises axial seals arranged to prevent a shearing of the first heat shield segment with respect to the second heat shield segment,
- FIG 4: depicts a close-up view of a sealing region illustrating the sealing member referred to in FIG 2,
- FIG 5: depicts an exploded view of the sealing region of the heat shield referred to in FIG 4,
- FIG 6: depicts a technical drawing of a cross-sectional view of the sealing member referred to in FIG 4, along a cross-section VI-VI,
- FIG 7: depicts a technical drawing of a cross-sectional view of the sealing member referred to in FIG 4 along a cross-section VII-VII,
- FIG 8: depicts a technical drawing of a cross-sectional view of the sealing member referred to in FIG 4 along a cross-section VIII-VIII,
- FIG 9: depicts the sealing member referred to in FIG 2, wherein the sealing member is provided with one or more holes at dedicated locations,
- FIG 10: depicts a perspective view of another embodiment of the circumferential heat shield referred to in FIG 2 comprising a sealing member for sealing the first heat shield segment and the second heat shield segment,
- FIG 11: depicts a close-up view of a sealing region of the circumferential heat shield referred to in FIG 10,
- FIG 12: depicts an exploded view of the circumferential heat shield comprising the sealing member referred to in FIG 10,
- FIG 13: depicts a technical drawing of a cross-sectional view of the sealing member referred to in FIG 10 along a cross-section XIII-XIII, and
- FIG 14: depicts a flowchart of a method for construction of the heat shield.

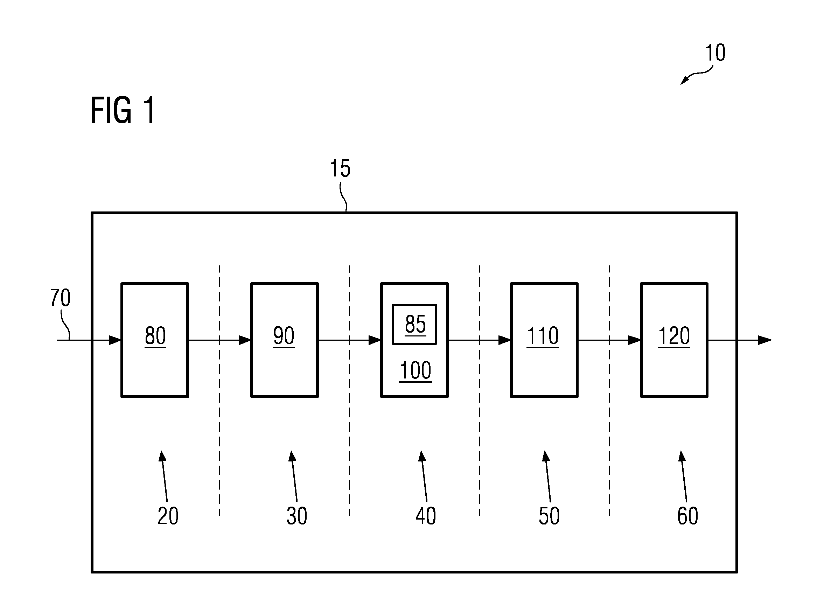

FIG 1 depicts a block diagram of a turbomachine 10 with a casing 15 for generating power.

The turbomachine 10 is a gas turbine 10. The gas turbine 10 comprises an intake section 20, a compression section 30, a combustion section 40, a turbine section 50, and an exhaust section 60.

Air 70 enters into the gas turbine 10 through an air inlet 80 into the intake section 20. The air 70 is compressed by a compressor 90 in the compression section 30, thereby enhancing the density of the air 70. The air 70 exiting the compression section 30 is mixed with a fuel 85 and ignited in a combustor 100 in the combustion section 40. The combustion of the air 70 with the fuel 85 in the combustor 100 results in an expansion of the air 70, thereby increasing the kinetic energy of the air 70. The air 70 is then directed towards a turbine 110 in the turbine section 50, wherein the kinetic energy of the air 70 is transferred to the turbine 110 for generating power. The hot air 70 exits the gas turbine 10 through a nozzle 120 in the exhaust section 60 at every combustion cycle.

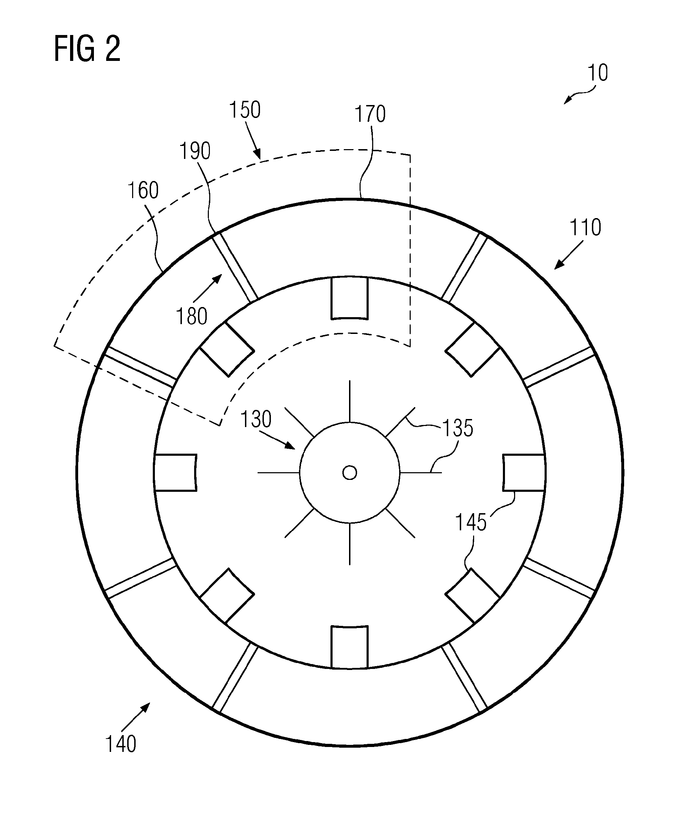

FIG 2 depicts a schematic cross-section of the turbine 110 in the turbine section 50.

The turbine 110 comprises a rotor 130 comprising a plurality of blades 135 and a stator 140 comprising a plurality of vanes 145. The hot air 70 from the combustor 100 is directed by the plurality of vanes 145 towards the plurality of blades 135, thereby causing the rotor 130 to rotate and generate the power. The combustion of the air 70 causes a tremendous increase in the temperature of the air 70. The gas turbine 10 and other components of the gas turbine 10 are subjected to the hot air 70 interacting inside the turbine section 50.

The stator 140 comprises a circumferential heat shield 150, which surrounds the turbine 110 in a circumferential manner, i.e. in an annular manner. The heat shield 150 shields components of the gas turbine 10, which are external to the turbine like the compressor 90, by absorbing excessive heat present in the hot air 70.

The heat shield 150 is an integral component and is subject to thermal expansion under the influence of the hot air 70. Long exposure to thermal expansion causes cracks in the heat shield 150 and reduces the mechanical life of the heat shield 150, if the heat shield 150 is made of a single unit. Therefore, a heat shield comprised of multiple heat shield segments, and wherein gaps between the heat shield segments are sealed resolves the aforementioned problem.

According to the present invention, the heat shield 150 comprises a first heat shield segment 160, a second heat shield segment 170, and a sealing member 180. Herein, a gap between the first heat shield segment 160 and the second heat shield segment 170 are sealed by the sealing member 180. Thus, the heat shield shields other sections of the gas turbine 10 from the hot air 70 in the turbine section 50. In general, the heat shield 150 can comprise more than those two heat shield segments 160, 170, wherein gaps between two adjacent heat shield segments would be sealed by a sealing member.

During operation of the turbine, the heat shield 150 is subjected to thermal expansion under the influence of the hot air 70. Thus, the gap between the heat shield segments 160, 170 which is sealed by the sealing member 180 also extends accordingly. Also, the sealing member 180 will itself thermally expand and makes sure that the gap remains sealed.

The heat shield 150 is a part of the stator 140 herein. According to an aspect, the heat shield 150 may be integrated with the plurality of vanes 145. According to another aspect, the heat shield 150 may be a separate unit surrounding the plurality of vanes 145.

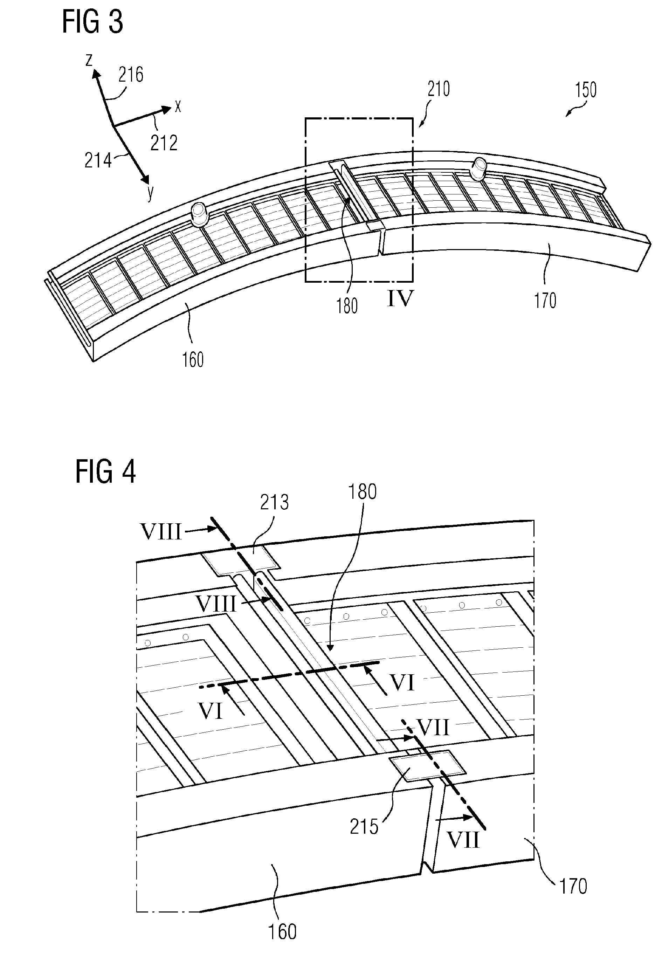

FIG 3 depicts a perspective view of an embodiment of the heat shield 150 according to the present invention.

A sealing region 210 depicts a region on the heat shield 150 where the first heat shield segment 160 and the second heat shield segment 170 are coupled by the sealing member 180. The first heat shield segment 160 is coupled to the sealing member 180, and the second heat shield segment 170 is also coupled to the sealing member 180 from opposing directions.

Herein, an X-axis 212 is a longitudinal axis, a Y-axis 214 is an axis in circumferential direction, and a Z-axis 216 is a radial axis with respect to the gas turbine 10.

FIG 4 depicts a close-up view of the sealing region 210 of the heat shield 150 according to the embodiment depicted in FIG 3.

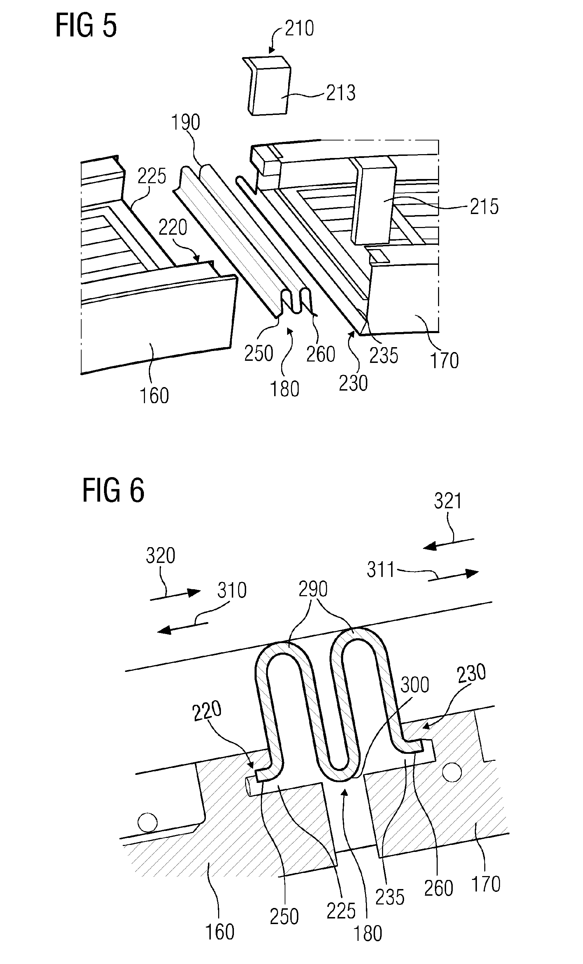

Cross sections VI-VI, VII-VII, and VIII-VIII depict the manner in which the sealing member 180 achieves the sealing of the gap present between the first heat shield segment 160 and the second heat shield segment 170. This will be elucidated in detail with reference to technical drawings depicted in FIGS 6 to 8.

Herein, a pair of axial seals 213,215 is arranged at each of extreme ends of the sealing member 180, wherein the extreme ends lie in a direction along the longitudinal axis 212. The pair of axial seals 213,215 protrudes radially and they seal axial gaps existing between the heat shield 150 and the stages that are upstream and/or downstream of the heat shield 150. An upstream stage may be the compressor 90 and a downstream stage may be the nozzle 120. For example, it can seal a hot gas path from an outside pressure of the compressor 90. Furthermore, the pair of axial seals 213, 215 restricts a longitudinal movement of the first heat shield segment 160 with respect to the second heat shield segment 170.

FIG 5 depicts an exploded view of the sealing region 210 of the heat shield 150 according to the embodiment depicted in FIG 3.

The first heat shield segment 160 comprises a first circumferential front face 220 and the second heat shield segment comprises a second circumferential front face 230. The first circumferential front face 220 and the second circumferential front face 230 oppose one another. The sealing member 180 is located between the first circumferential front face 220 and the second circumferential front face 230.

Herein and in the following sections, the orientation of a two dimensional plane or a face in a three dimensional space is always defined by a normal vector of that plane, i.e. a vector that is standing perpendicular to that plane. Thus, a circumferential plane is oriented such that its normal vector extends in circumferential direction. In other words, the plane itself extends in radial and longitudinal directions, with respect to the coordinate system defined above and to the longitudinal axis 212 of the gas turbine 10, respectively. Correspondingly, a radial plane would have a normal vector in radial direction etc.

The sealing member 180 comprises a first sealing segment 250, a second sealing segment 260, and a circumferentially resilient portion 190. The circumferentially resilient portion 190 is located between the first and second sealing segments 250,260. Moreover, at least the circumferentially resilient portion 190 is pre-stressed in a circumferential direction by the first circumferential front face 220 and the second circumferential front face 230. Many such resilient portions 190 placed between adjacent heat shield segments 160,170 in a circumferential manner holds the heat shield segments 160,170 in a tight and compact manner. A more efficient sealing of the gaps between the adjacent heat shield segments 160,170 is also achieved therewith.

Under normal operating temperatures, the circumferential front faces 220,230 of the heat shield segments 160,170 pre-stress the circumferentially resilient portion 190. The circumferentially resilient portion 190 exerts an opposite portion on to the respective heat shield segments 160,170. When the heat shield 150 expands upon its exposure to very high operational temperatures, the heat shield segments 160,170 along with the sealing member 180 expand. However, the circumferential resilience property of the sealing member 180 and the pre-stress applied by the circumferential front faces 220,230 prevent the separation of these components and holds the components of heat shield 150 together even during extreme operational conditions.

The first and the second circumferential front faces 220, 230 and the sealing member 180 are coupled such that the sealing segments 250, 260 of the sealing member 180 are in contact with the first and the second circumferential front faces 220, 230. For this, the first circumferential front face 220 is provided with a first means 225 to receive the first sealing segment 250, and similarly the second circumferential front face 230 is provided with a second means 235 to receive the second sealing segment 260. By this, the sealing segments 250, 260 can be coupled to the corresponding circumferential front faces 220, 230.

The first means 225 is a first groove provided on the first circumferential front face 220, and similarly the second means 235 is a second groove provided on the second circumferential front face 230. The grooves 225,235 longitudinally extend between two extreme ends of the front faces 220,230. The first sealing segment 250 can comprise a protrusion, and similarly the second sealing segment 260 can comprise another protrusion. These protrusions longitudinally extend between two extreme ends of the sealing segment 180. The protrusion on the first sealing segment 250 is accommodated in the first groove 225 and the protrusion on the second sealing segment 250 is accommodated in the second groove 235.

The protrusions and the grooves 225,235 may be profiled such that a tight sealing between the first heat shield segment 160 and the second heat shield segment 170 is achieved by the sealing member 180. For example, a groove and a protrusion (wherein the protrusion is accommodated in the groove) dovetail each other. Similarly, dimensions and profiles of the circumferential front faces 220, 230 and the sealing segments 250, 260 may be chosen such that tight couplings are achieved between a respective front face and a respective sealing segment.

With this the turbine section is effectively isolated from other sections of the gas turbine in spite of the heat shield undergoing thermal expansion on being exposed to these high temperatures.

The circumferentially resilient portion 190 of the sealing member 180 is corrugated in accordance with an embodiment. The corrugated profile increases circumferential resilience, which is beneficial in enhancing the compactness of the heat shield 150 that comprises multiple heat shield segments 160,170.

The circumferentially resilient portion 190, by its virtue of being circumferentially resilient, exerts an equal and an opposite force on the first heat shield segment 160 and the second heat shield segment 170. The force is experienced on a contact established between the first circumferential front face 220 and the first sealing segment 250, and on a contact established between the second circumferential front face 230 and the second sealing segment 260.

The heat shield 150 is exposed to extreme temperatures during the operation of the gas turbine 10, which cause the heat shield segments 160, 170 and the sealing member 180 to expand, resulting in a relative displacement of the first and second circumferential front faces 220, 230 in the circumferential direction. This can result in misalignment of the heat shield segments 160,170 with respect to each other and causing the gap between the heat shield segments 160,170 to widen thereby resulting in inefficient sealing. This is prevented by making circumferentially resilient portion 190 corrugated and pre-stressing the corrugated circumferentially resilient portion 190.

According to an embodiment, a co-efficient of thermal expansion of the circumferentially resilient portion 190 is higher than a coefficient of thermal expansion of the first heat shield segment 160 and a coefficient of thermal expansion of the second heat shield segment 170. In this case, for a given temperature, the circumferentially resilient portion 190 undergoes a higher volumetric expansion in the circumferential direction in comparison with both the heat shield segments 160, 170. By this, the heat shield 150 expands radially, and it ensures expansion of the heat shield 150 without the heat shield segments 160, 170 undergoing deformations and/or cracks. The circumferentially resilient portion 190 is also made of a flexible material that is pliable to accommodate the mechanical stresses and deformations without undergoing buckling and cracking.

In another aspect, the heat shield segments 160, 170 may possess a higher coefficients of thermal expansion compared to the coefficient of thermal expansion of the circumferentially resilient portion 190. In this case, with an increase in the temperature, the heat shield segments 160, 170 expand more in comparison to the circumferentially resilient portion 190, thereby causing the circumferentially resilient portion 190 to compress. The circumferentially resilient portion 190, by virtue of it being flexible, accommodates the expansion of the heat shield segments 160, 170 by getting compressed due to the expansive force exerted by the heat shield segments 160, 170. Thus, the circumferentially resilient portion 190 acts as a mechanical shock absorber, and obviates both deformation and thermal cracks in the heat shield 150. The circumferentially resilient portion 190 facilitates the dampening of mechanical vibrations and shocks encountered by the heat shield 150 during its operation.

In accordance with an embodiment, the circumferentially resilient portion 190 is made of an alloy of nickel. Nickel alloys display a uniform and a predictable expansion over a particular temperature range. Furthermore, nickel alloys possess high strength, a constant modulus of elasticity and a high co-efficient of thermal expansion. However, the circumferentially resilient portion 190 can be made of any material that displays and behaves in the aforementioned manner and possesses the aforementioned characteristics.

The circumferentially resilient portion 190 is laser sintered according to an embodiment of the invention. Herewith, it is possible to achieve customized shapes of the circumferentially resilient portion 190.

The expansion and contraction of the heat shield 150 may disturb an alignment of the first heat shield segment 160 and the second heat shield segment 170. In short, the heat shield segments 160, 170 may shear with respect to one another. The axial seals 213, 215 extend radially with respect to the sealing member 180 and are arranged such that the aforesaid shearing is obviated.

The arrangement of the axial seals 213, 215 seals a hot gas path from an outside pressure of the compressor 90 of the turbomachine 10. The pressure of the air 70 from the compressor 90 is higher than the pressure of the air 70 in the turbine 110. Therefore, the pressure difference acts radially inwards, that is towards the turbine 110. The sealing achieved by the arrangement of the axial seals 213, 215 is such that it prevents an interaction between the hot air 70 in the turbine section 50 with the air 70 downstream of the compressor 90.

Additionally, the arrangement of the axial seals 213, 215 secures a contact established between the first circumferential front face 220 and the first sealing segment 250, and a contact established between the second circumferential front face 230 and the second sealing segment 260. This can be achieved by inserting the axial seal 213 through a slot, wherein a first part of the slot is on the first heat shield segment and a second part of the slot is on the second heat shield segment, opposing the first part of the slot. Similarly, the axial seal 215 can be inserted on a similar corresponding slot, wherein the corresponding slot is provided on a longitudinally opposite end. This restricts a longitudinal movement of the sealing member 180.

FIG 6 depicts a technical drawing of a cross-sectional view of the sealing region 210 depicted in FIG 4 as viewed along a cross-section VI-VI.

The circumferentially resilient portion 190 is corrugated, and is profiled in such a way that it comprises a pair of crests 290 and a trough 300, i.e. it has an "M"-shaped cross section. Therefore, the sealing member 180 comprising the corrugated circumferentially resilient portion 190 with an M-shaped profile may be termed an M-seal. The corrugated profile of the circumferentially resilient portion 190 renders the sealing member 180 circumferentially resilient in directions as represented by the reference numerals 310, 311. The first heat shield segment 160 and the second heat shield segment 170 pre-stress the sealing member 180 in directions as represented by the reference numerals 320, 321, i.e. in circumferential direction.

The circumferentially resilient portion 190 can be profiled in such a way that it comprises a multiple "M"-shaped cross-section and, respectively, for example 'n>2' crests and 'n-1' trough or 'n' crests and 'n' troughs. However, the sealing member 180 comprising a corrugated circumferentially resilient portion 190 with a multiple M-shaped profile may still be termed an M-seal.

The first sealing segment 250 is received by the first groove 225 of the first circumferential front face 220, and the second sealing segment 260 is received by the second groove 235 of the second circumferential front face 230. The radial extension of the first sealing segment 250 and the second sealing segment 260 is such that they form a tight fit with the first circumferential front face 220 and the second circumferential front face 230, respectively. This is achieved by profiling the protrusions of the first and second sealing segments 250, 260 to form a tight fit with the corresponding first and second grooves 225,235 of the front faces 220,230. By a tight fit, a tight coupling between a front face and a corresponding sealing segment is achieved.

Upon the exposure of the heat shield 150 to high operational temperatures, the circumferentially resilient portion 190 of the sealing member 180 expands in opposing directions as represented by the reference numerals 310, 311. Similarly a portion of the first heat shield segment 160 proximal to the first circumferential sealing segment 250 expands in a direction as represented by the reference numeral 320, and a portion of the second heat shield segment 170 proximal to the second circumferential sealing segment 260 expands in a direction as represented by the reference numeral 321.

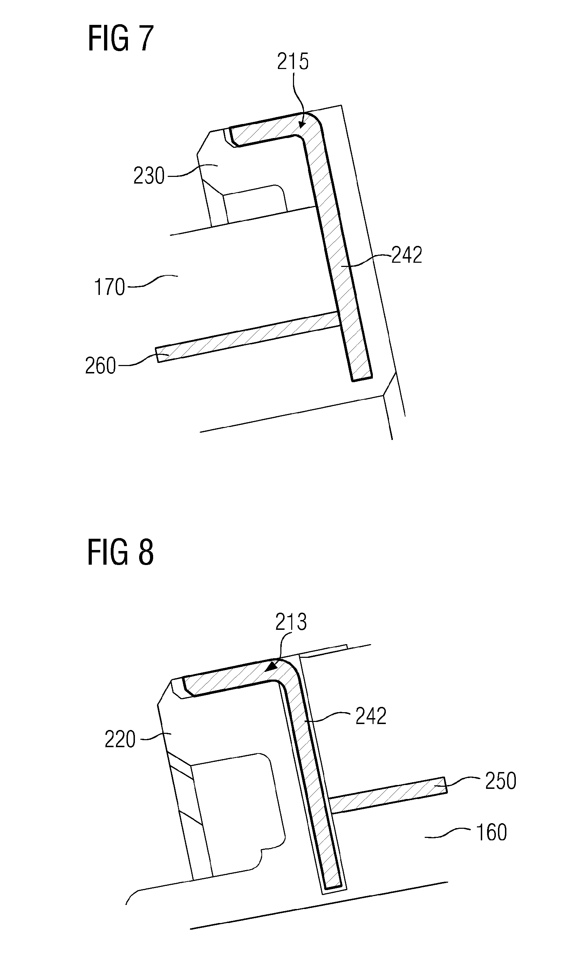

FIG 7 and FIG 8 depict technical drawings of respective cross-sectional views of the sealing region 210 depicted in FIG 4 as viewed along cross-sections VII-VII and VIII-VIII respectively.

The cross sections VII-VII and VIII-VIII depict an arrangement of the axial seals 213 and 215. Radially extending portions 242, 244 of the pair of axial seals 213 and 215 secure a contact established between the first circumferential front face 220 and the first circumferential sealing segment 250, and a contact established between the second circumferential front face 230 and the second circumferential sealing segment 260.

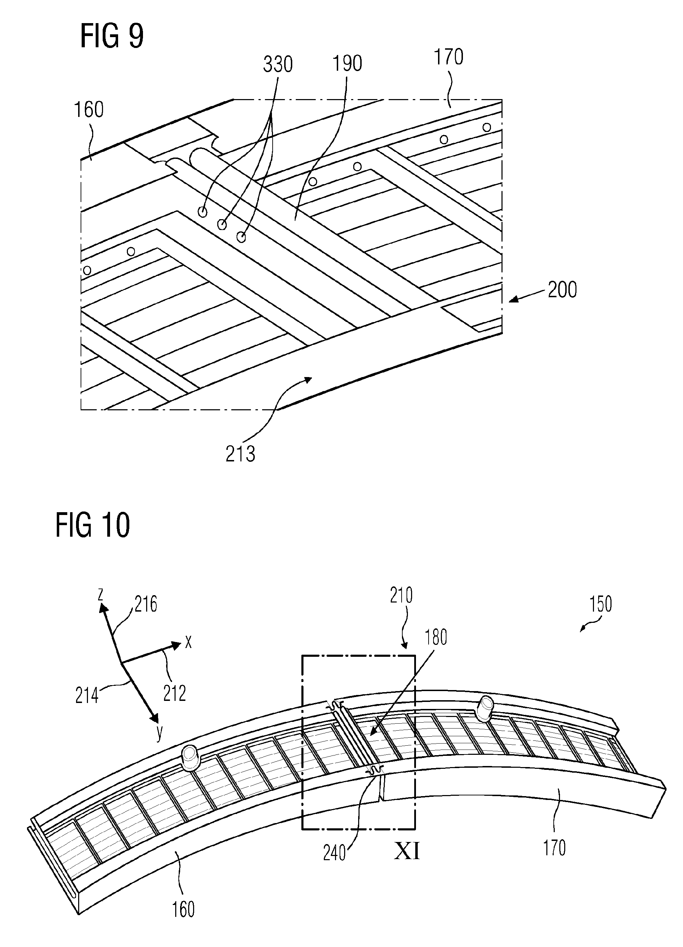

FIG 9 depicts the sealing member 180 according to FIG 5, wherein the sealing member is provided with one or more holes 330 at dedicated locations.

The holes 330 facilitate the introduction of a controlled leakage in the heat shield 150. Controlled leakage is a process of regulation of ambient temperature of the heat shield 150. The heat shield 150 is cooled using compressed air from the compressor 90. The temperature of air exiting the compressor 90 is less than temperature of the air exiting the combustor 100. Therefore, the air exiting the combustor 100 is termed as hot air and the air exiting the compressor 90 is termed as cold air 90. At normal operating temperature of the gas turbine 10, the holes 330 remain occluded due to the corrugated profile of the circumferentially resilient portion 190.

Herein, the term "dedicated location" on the sealing member 180 is defined as a location at which a hole provided at that location is capable of facilitating the release of hot air 70 outwards from the geometrical space enclosed by the annular heat shield 150. Preferably, the dedicated location is on the corrugated profile of the circumferentially resilient portion 190. This is similar to a feedback control system for regulating the ambient temperature of the annular heat shield 150 and maintaining a stable operating condition.

The corrugated portion 240 stretches in the directions 310, 311 when the circumferentially resilient portion 190 expands with an increase in the ambient temperature. This exposes the one or more holes 330 on the corrugated portion 240, which facilitates the release of the cold air 70 from the inside of the heat shield 150. Thus, it reduces and regulates the ambient temperature of a geometrical space enclosed by the heat shield 150. This process cools the external and internal regions of the heat shield 150.

FIG 10 depicts a perspective view of another embodiment of the heat shield 150 according to the present invention.

While in the embodiment described with reference to FIGS 3 to 9 the axial sealing has been achieved by separate axial seals 213, 215 of the sealing member 180, the embodiment described with reference to FIGS 10-13 discloses a sealing member 180 with axial sealing segments 335 at both ends of the sealing member 180 which are in itself an integral part of the sealing member 180.

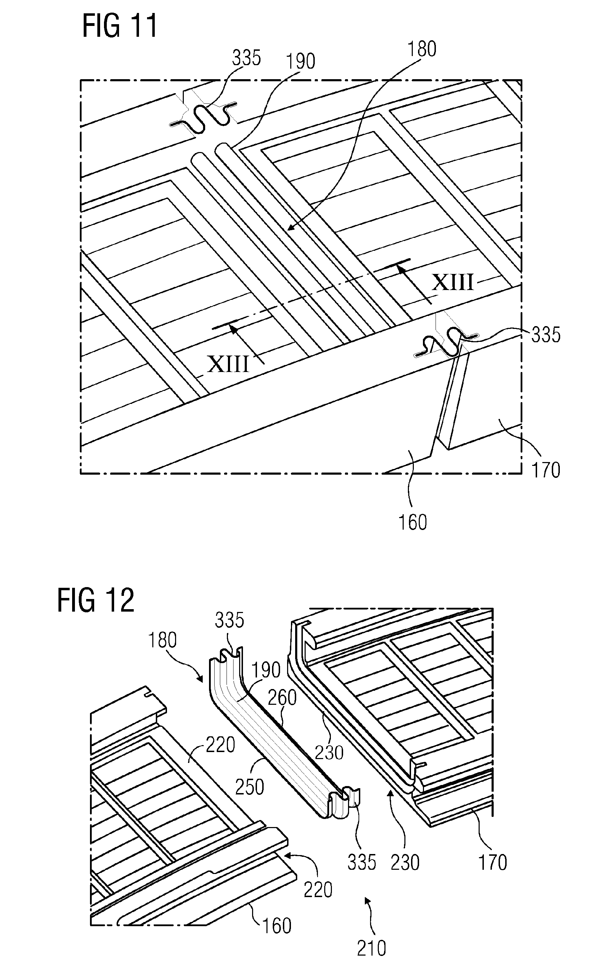

The first heat shield segment 160 and the second heat shield segment 170 are sealed together by the sealing member 180. The sealing member 180 comprises axial sealing segments 235 located at both ends of the sealing member 180, wherein said ends of the sealing member 180 are in a direction along the longitudinal axis 212. The sealing region 210 depicts the sealing member 180 and its arrangement with the first heat shield segment 160 and the second heat shield segment 170. FIG 11 depicts a close-up view of the sealing region 210 of the heat shield 150 according to the embodiment depicted in FIG 10.

According to the embodiment depicted herein, the first circumferential front face 220 and the second circumferential front face 230 further extend radially. Therewith, the first groove 225 and the second groove 235 further protrude radially to accommodate the radially protruding integral axial sealing segments 335.

The profile of the sealing member 180 depicted in FIG 11 is such that the arrangement of the heat shield segments 160, 170 and the sealing member 180 are both radially and longitudinally sealed. Thereby, a hot gas path is sealed from an outside pressure of the compressor 90 of the turbomachine 10. The objective achieved by the radially protruding integral axial sealing segments 335 is identical to the objective achieved by the arrangement of the axial seals 213, 215 as described in the preceding sections.

Additionally, the integral axial sealing prevents the shearing of the heat shield segments 160,170 with respect to one another is prevented.

FIG 12 depicts an exploded view of the sealing region 210 of the heat shield 150 according to the embodiment depicted in FIG 11.

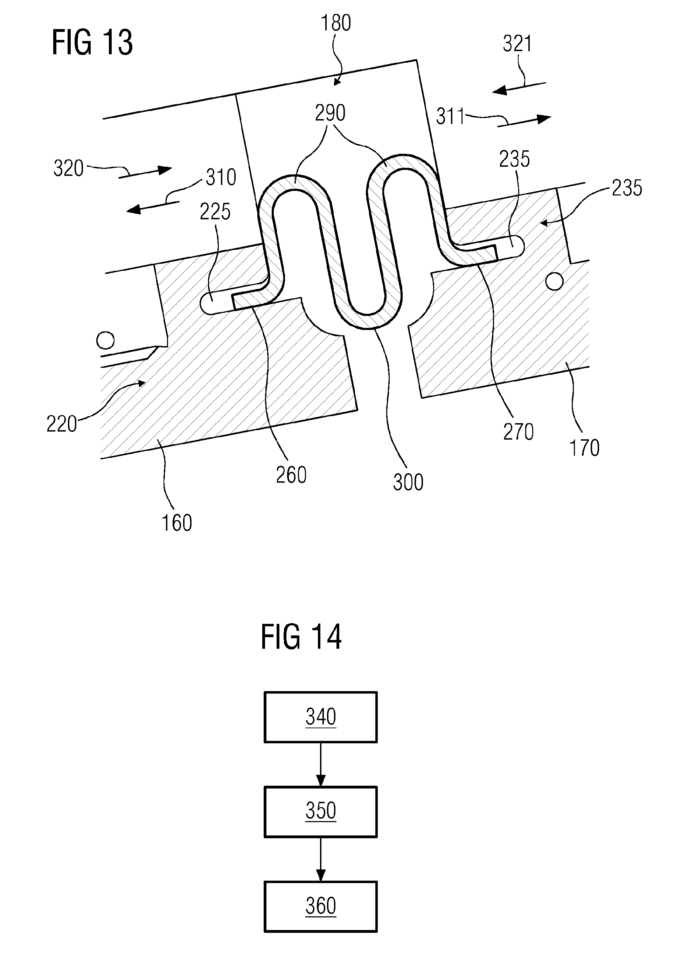

FIG 13 depicts a cross-section XIII-XIII in which the sealing member 180 achieves the sealing of the first heat shield segment 160 and the second heat shield segment 170.

The axial sealing segments 335 are now integral parts of the sealing member 180 and protrude radially outwards from the circumferentially resilient portion 190 and the sealing segments 250, 260 such that it secures both the contact established between the first circumferential front face 220 and the first sealing segment 250, and the contact established between the second circumferential front face 230 and the second sealing segment 260.

The axial sealing segments 235 are profiled such that the aforementioned secured contacts are achieved. Herein, by this profiling the shearing of the first heat shield segment 160 with respect to the second heat shield segment 170 is restricted by the radially extending axial sealing segments 335 of the sealing member 180.

Herein, the entire sealing member 180 may be made of an alloy of nickel. Also, the sealing member 180 may be laser sintered to obtain the profile according to the embodiment as depicted in FIG 12.

Thus, the sealing of the first heat shield segment 160 and the second heat shield segment 170 in both the longitudinal and radial directions is achieved.

FIG 14 depicts a flow chart of a method for construction of the heat shield 150 according to any of the embodiments mentioned herein.

In step 340, the first heat shield segment 160 and the second heat shield segment 170 are arranged such that the first circumferential front face 220 and the second circumferential front face 230 oppose one another. The first circumferential front face 220 and the second circumferential front face 230 extend longitudinally and radially and comprise the first groove 225 and the second groove 235, respectively.

In step 350, the sealing member 180 is arranged between the first heat shield segment 160 and the second heat shield segment 170. The sealing member comprises the longitudinally extending first sealing segment 250 and the second sealing segment 260, along with the circumferentially resilient portion 190. The circumferentially resilient portion 190 is circumferentially resilient and is pre-stressed by the first circumferential front face 220 and the second circumferential front face 230. The first sealing segment 250 is received by the first circumferential front face 220, and the second sealing segment 260 is received by the second circumferential front face 230. Herewith, the gap between the first heat shield segment 160 and the second heat shield segment 170 are closed by the sealing member 180.

In a step 360, one or more holes 330 are provided at the dedicated locations on the sealing member. Thus, it is possible to introduce a controlled leakage in the geometrical space enclosed by the heat shield 150. Herewith, the ambient temperature of the geometrical space is regulated by the controlled leakage.

The aforementioned steps 340 and 350 are important for working of the invention, whereas the step 360 is an optional step.

Though the invention has been described with reference to specific embodiments, this description is not meant to be construed in a limiting sense. Various examples of the disclosed embodiments, as well as alternate embodiments of the invention, will become apparent to persons skilled in the art upon reference to the description of the invention. It is therefore contemplated that such modifications can be made without departing from the embodiments of the present invention as defined.

## Claims

1. A circumferential heat shield (150) for a turbomachine (10), the circumferential heat shield (150) comprising:
- a first heat shield segment (160) comprising a first circumferential front face (220),
- a second heat shield segment (170) comprising a second circumferential front face (230), wherein the first circumferential front face (220) opposes the second circumferential front face (230), and
- a sealing member (180) located between the first circumferential front face (220) and the second circumferential front face (230) for closing a gap between the first heat shield segment (160) and the second heat shield segment (170), **characterised in that**:
- at least a portion (190) of the sealing member (180) is circumferentially resilient, and
- at least the circumferentially resilient portion (190) is circumferentially pre-stressed by the first circumferential front face (220) and the second circumferential front face (230).

2. The circumferential heat shield (150) according to claim 1, wherein the sealing member (180) comprises a first sealing segment (250) and a second sealing segment (260), wherein
- the first sealing segment (250) is coupled to the first circumferential front face (220), and the second sealing segment (260) is coupled to the second circumferential front face (230), and
- the circumferentially resilient portion (190) is located between the first sealing segment (250) and the second sealing segment (260).

3. The circumferential heat shield (150) according to claim 2, wherein the first circumferential front face (220) is provided with a first means (225) for receiving the first sealing segment (250), and wherein the second circumferential front face (230) is provided with a second means (235) for receiving the second sealing segment (260).

4. The circumferential heat shield (150) according to claim 3, wherein the first means (225) is a first groove in the first circumferential front face (220) and the second means (235) is a second groove in the second circumferential front face (230).

5. The circumferential heat shield (150) according to claim 4, wherein the first sealing segment (250) is coupled to the first circumferential front face (220) by receiving the first circumferential sealing segment (250) in the first groove (225), and wherein the second sealing segment (260) is coupled to the second circumferential front face (230) by receiving the second sealing segment (260) in the second groove (235).

6. The circumferential heat shield (150) according to any of the claims 2 to 5, wherein the first sealing segment (250) is tightly coupled to the first circumferential front face (220), and wherein the second sealing segment (260) is tightly coupled to the second circumferential front face (230).

7. The circumferential heat shield (150) according to any of the claims 1 to 6, wherein the sealing member (180) further comprises at least an integral axial sealing segment (335) for sealing a hot gas path from an outside pressure of a compressor (90) of the turbomachine (10), wherein the integral axial sealing segment (335) is located at an extreme end of the sealing member (180) and protrudes radially outwards from the circumferentially resilient portion (190).

8. The circumferential heat shield (150) according to any of the claims 1 to 6, further comprising at least an axial seal (213, 215) for sealing a hot gas path from an outside pressure of a compressor (90) of the turbomachine (10), wherein the axial seal (213, 215) is arranged at an extreme end of the sealing member 180 and protrudes radially outwards from the circumferentially resilient portion (190).

9. The circumferential heat shield (150) according to any of the claims 1 to 8, wherein a coefficient of thermal expansion of the circumferentially resilient portion (190) is higher than a coefficient of thermal expansion of the first heat shield segment (160) and a coefficient of thermal expansion of the second heat shield segment (170).

10. The circumferential heat shield (150) according to any of the claims 1 to 9, wherein the circumferentially resilient portion (190) is corrugated.

11. The circumferential heat shield (150) according to any of the claims 1 to 10, wherein the circumferentially resilient portion (190) is laser sintered.

12. The circumferential heat shield (150) according to any of the claims 1 to 11, wherein the sealing member (180) comprises an alloy of nickel.

13. The circumferential heat shield (150) according to any of the claims 1 to 12, wherein the sealing member (180) comprises one or more holes (330) for introducing a controlled leakage into a geometrical space enclosed by the circumferential heat shield (150) for regulating the ambient temperature of the geometrical space.

14. A method for construction of a circumferential heat shield (150) for a turbomachine (10), the method comprising:
- a step (340) of arranging a first heat shield segment (160) and a second heat shield segment (170), wherein the first heat shield segment (160) comprises a first circumferential front face (220), wherein the second heat shield segment (170) comprises a second circumferential front face (230), and wherein the first heat shield segment (160) and the second heat shield segment (170) are arranged such that the first circumferential front face (220) and the second circumferential front face (230) oppose one another, and
- a step (350) of arranging a sealing member (180) between the first circumferential front face (220) and the second circumferential front face (230) for closing a gap between the first heat shield segment (160) and the second heat shield segment (170), wherein the sealing member comprises a circumferentially resilient portion (190), and wherein the sealing member (180) is arranged such that the circumferentially resilient portion (190) is circumferentially pre-stressed by the first circumferential front face (220) and the second circumferential front face (230).

15. The method according to claim 14, further comprising:
- a step (360) of providing one or more holes (330) on the sealing member (180) for introducing a controlled leakage into a geometrical space enclosed by the circumferential heat shield (150) for regulating the ambient temperature of the geometrical space.
